# EUROPEAN PATENT SPECIFICATION

(11) **EP 2 559 333 B1**
(45) Date of publication and mention of the grant of the patent: **13.08.2014**
(21) Application number: 11184565.7
(22) Date of filing: 11.10.2011
(51) Int. Cl.: A01D 43/063, A01D 43/07

(54) **Riding-type mower**
Aufsitzmäher
Tondeuse à gazon à conducteur porté

(30) Priority: 18.08.2011 JP 2011179190
(43) Date of publication of application: 20.02.2013
(73) Proprietor: ISEKI & CO., LTD., Matsuyama-shi Ehime-ken 799-2692 (JP)
(72) Inventor: Matsugi, Satoshi, Iyo-gun, Ehime 791-2193 (JP); Okamoto, Suguru, Iyo-gun, Ehime 791-2193 (JP); Enomoto, Wakao, Iyo-gun, Ehime 791-2193 (JP); Yoshiki, Shinya, Iyo-gun, Ehime 791-2193 (JP)
(74) Representative: Grünecker, Kinkeldey, Stockmair & Schwanhäusser

(56) References cited:
- FR-A1- 2 681 216
- FR-A1- 2 728 136
- JP-A- 2009 273 406
- US-A1- 2002 038 537
- US-A1- 2005 281 645
- US-A1- 2006 042 214

## Description

### BACKGROUND OF THE INVENTION

### Field of the Invention

The present invention relates to a riding-type mower with a grass container, which collects the grass clippings, connected at a rear portion thereof to perform a mowing operation for cutting grass or lawn.

### Related art of the Invention

FR 2728136, which is the basis for the preamble of claim 1, describes a lawnmower grass bin is in the shape of a tank with a top opening. It has a main body forming the front and a rear emptying shell which forms a rear wall. The emptying shell is hinged on the main body about a horizontal spindle in its upper edge. A control lever on the lawnmower opens and closes the emptying shell. The main body has an upper peripheral edging and the emptying shell is pivoted on its rear wall.

A mower described in a patent document of a Japanese Patent Application Laid-Open No. 2009-273406 is known as a conventional example of a riding-type mower which performs a mowing operation for cutting grass or lawn.

According to the patent document of a Japanese Patent Laid-Open No. 2009-273406, as shown in FIG. 12, the conventional mower has a pair of right and left steerable front wheels 1 and 1, and a pair of right and left driven rear wheels 2 and 2, and is constructed to run by itself.

The conventional mower comprises a riding-type self-propelled vehicle having a driver's section with a driver's seat 3 mounted on the rear portion of the self-propelled vehicle and a grass collecting unit 30 which is mounted on the rear portion of the chassis 4 of the self-propelled vehicle and has a grass container 32 supported through a support frame assembly 31. A mower unit 20 is connected to the chassis 4 of the self-propelled vehicle between the front wheels and the rear wheels through a link mechanism 10.

The conventional mower further comprises an engine 5 mounted on the front portion of the chassis 4 and a power take off mechanism 6 arranged under the engine 5. The power takeoff mechanism 6 transmits output from an output shaft 5a of the engine 5, oriented to a forward direction of a vehicle body, to an input shaft 6a through a transmission belt 9, and also transmits a driving force, which is transmitted to the input shaft 6a, from the output shaft 6b to a blade driving unit 22 arranged above a blade housing 21 of the mower unit 20 through a rotary transmission shaft 7.

The link mechanism 10 has a pair of right and left front pivotable links 11 and 11 supported to the chassis 4 to be vertically pivotable, a pair of right and left rear pivotable links 12 and 12 supported to the chassis 4 to be vertically pivotable, and a pair of right and left interlocking links 13 and 13.

The pair of right and left front pivotable links 11 and 11 are connected at distal ends thereof to a front connecting member 23 positioned at the front portion of the blade housing 21 of the mower unit 20. The pair of right and left rear pivotable links 12 are connected at distal ends thereof to a rear connecting member 24 positioned at the rear portion of the blade housing 21. The left interlocking link 13 is adapted to interlock the left front pivotable link 11 with the left rear pivotable link 12 and the right interlocking link 13 is adapted to interlock the right front pivotable link 11 with the right rear pivotable link 12. The pair of right and left front pivotable links 11 and 11 are interlocked with each other through a single rotary support shaft 14. A lift cylinder 15 is interlocked with the left front pivotable link 11.

More particularly, the link mechanism 10 is vertically pivoted relative to the chassis 4 as the front pivotable link 11 is pivoted by the lift cylinder 15. By the configuration described above, it becomes possible to perform a lowered operative mode in which the ground gauge rollers 25 supporting the front portion and the rear portion of the blade housing 21 of the mower unit 20 contact the ground, and a raised inoperative mode in which the ground gauge rollers 25 are raised from the ground.

When the lawn mower travels with the mower unit 20 being in the lowered operative mode, cutting blades 26 arranged transversely in the interior of the blade housing 21 are rotatably driven about a vertical axis by the blade driving unit 22. In this manner, a mowing operation is performed by action of each cutting blade 26, and the grass clippings are discharged through a grass discharge duct 27 positioned above the blade housing 21 by blown air generated by rotation of the cutting blades 26.

The grass clippings discharged from the grass discharge duct 27 are directed to the grass container 32 by transporting action of blown air from the cutting blades 26 and guiding action of a transport duct 8 which is mounted on the self-propelled vehicle and extends between the pair of right and left rear wheels 2 and 2 in a front-back direction of the vehicle body, and then collected and accumulated in the grass container 32.

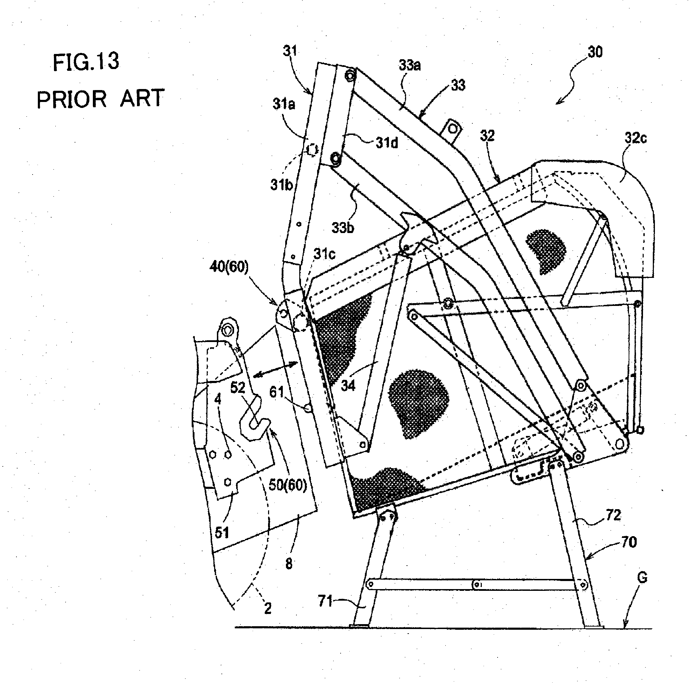

On the other hand, as shown in FIG.13, in order to remove the grass collecting unit 30 from the conventional mower, the stand unit 70 is switched to a lowered use position, and a pair of right and left lift cylinders 34 and 34 are contracted to lower the grass container 32.

When the front stand body 71 and the rear stand body 72 contact the ground G to allow the grass container 32 to be supported to the ground G through the stand unit 70, the pair of right and left attachment connecting pins 62 and 62 are removed to contract the pair of right and left lift cylinders 34.

Each lift cylinder 34 allows the support frame assembly 31 and the link mechanism 33 to be pivoted relative to each other to narrow a distance between the lower end portion of the support frame assembly 31 and a distal end portion of the lower lift link 33b, thereby allowing the lower end portion of the support frame assembly 31 to be moved rearward and upward with respect to the grass container 32.

As a result, the connecting unit 40 at the grass collecting unit side is moved rearward and upward away from the connecting unit 50 at the vehicle body side, and a pair of right and left fixing connecting pins 61 and 61 are removed from the lower pin receiving openings 52 provided in the support members 51 to release connection established by the connecting mechanism 60 between the connecting unit 40 at the grass collecting unit side and the connecting unit 50 at the vehicle body side, so that the grass collecting unit 30 can be detached from the self-propelled vehicle.

### SUMMARY OF THE INVENTION

### TECHNICAL PROBLEM

However, according to the conventional riding-type mower, since it is necessary to remove the support frame assembly itself supporting the grass container 32 from the self-propelled vehicle in order to remove the grass container 32 from the self-propelled vehicle as the mower main body, there is a technical problem that the blinkers which are necessary at the time of a road run can not be attached to the support frame assembly 31 having a portion which extends to the position that is higher than the driver's seat 3.

In view of the above-mentioned problem of the conventional mowers, the present invention is directed to a riding-type mower having a configuration in which the parts that are necessary at the time of a road run can be attached to a support frame unit extending to the position that is higher than the driver's seat.

### MEANS FOR SOLIVING THE PROBLEMS

To achieve the above object, the present invention is a riding-type mower(100), according to claim 1.

According to the riding-type mower mentioned above, since the support frame unit is still placed on the rear portion of the vehicle body after the grass container has been detached from the support frame unit, it becomes possible to attach the parts (for example, blinkers or direction indicator lamps) which are necessary at the time of a road run to the support frame unit having a portion which extends to the position that is higher than the driver's seat, and it is easy to run on road.

According to the riding-type mower mentioned above, it becomes easy to attach the grass container to the support frame unit. And also, since each one end of the lift arms is still rotatably connected to the connecting unit after the grass container is detached from the support frame unit, the position of the each one end of the vertical pair of lift arms mutually maintains a constant interval without disconnection.

Another aspect of the present invention is the riding-type mower (100),
wherein the connecting unit (180,181L,181R) has a hook part(182) which fits to a protruding part for positioning(131g) formed on surface of the support frame unit(131, 131L, 131R).

According to the riding-type mower mentioned above, it becomes easy to perform the positioning work when the grass container is connected to the support frame unit, so that the grass container can be easily attached to and detached from the support frame unit.

Another aspect of the present invention is the riding-type mower(100),
wherein the connecting unit(180,181L,181R) has a pin connecting part(181a,181b) at each position of a upper side of the hook part and a lower side of the hook part(182), and a connecting pin(137) used for connection to the support frame unit(131,131L, 131R) is inserted into the pin connecting part(181a,181b), and
the each connecting pin(137) penetrates to the support frame unit(131,131L,131R) through the pin connecting part(181a,181b), so that the connecting unit(180,181 L,181R) is connected to the support frame unit(131,131L,131R).

According to the riding-type mower mentioned above, it becomes easy to insert the each connecting pin into the through-hole formed on the support frame unit when the connecting pin is inserted into the pin connecting part formed at each position of the upper side and lower side of the hook part which is fitted to the protruding part for positioning.

Another aspect of the present invention is the riding-type mower(100),
wherein the connecting unit(180,181L,181R) has a supporting member(183) for supporting a stick-like jig(184) which is used for performing adjustment of a position when the connecting unit(180) is connected to the support frame unit(131).

According to the riding-type mower mentioned above, it becomes easy to engage the hook part with the protruding part for positioning placed on the support frame unit, when the worker draws the connecting unit to the support frame unit while performing adjustment of the position using the jig like a lever.

Another aspect of the present invention is the riding-type mower(100),
wherein the support frame unit(131) has a quadratic prism-shaped support part(131L,131R) and the protruding part for positioning(131g) is a columnar projection(131g) that protrudes from the surface of the support part(131L,131R),
the connecting unit(180,181L,181 R) has a fitting part(181L, 181R) with a section of shape like a letter of U in alphabet, the fitting part(181L, 181R) being fitted to the support frame unit(131L, 131R) with enclosing three sides among four sides of the support frame unit(131L, 131R), thereby being connected to the support frame unit(131), and the hook part(182) is a notch part(182) which is formed on at least one side of mutually opposed sides of the fitting part(181L, 181R) with the section of shape like the letter of U in alphabet,
the supporting member(183) is a curve shaped member(183) which has a curve shaped portion(183a) like a letter of U in alphabet at a center portion thereof, and both end portions of the curve shaped member(183) are fixed to positions of upper side and lower side of the notch part(182) respectively, with stepping over the notch part(182),
when the connecting unit(180, 181L, 181R) is connected to the support frame unit(131, 131L, 131R), the notch part(182) is moved to the columnar projection side and is fitted to the columnar projection(131g) in such a manner that one end of the stick-like jig(184) is inserted into the curve shaped portion(183a), the one end of the stick-like jig(184) abuts against a side surface of the support part(131L,131 R), and an another end of the stick-like jig(184) is moved by using, as a fulcrum, a position of the side surface of the support part(131 L,131 R) against which the one end of the stick-like jig(184) abuts, in a direction where the curve shaped portion(183a) is drawn to the vehicle body(104) side, while a portion between the one end and the another end of the stick-like jig(184) is being abutted against an inner side of the curve shaped portion(183a).

According to the riding-type mower mentioned above, because the supporting member(183) is formed to the toroidal shape, the stick-like jig(184) is surely supported in the simple structure.

### ADVANTAGEOUS EFFECTS OF THE INVENTION

According to the present invention, it is possible to provide a riding-type mower having a configuration in which the parts that are necessary at the time of a road run can be attached to a support frame unit extending to the position that is higher than the driver's seat.

### BRIEF DESCRIPTION OF THE DRAWINGS

FIG. 1 is a side view illustrating a riding-type mower according to Embodiment 1 of the present invention;
FIG. 2 is a partial sectional schematic plan view illustrating a riding-type mower according to Embodiment 1 of the present invention;
FIG. 3 is a side view illustrating a state where a grass collecting unit is placed behind a support frame unit of a riding-type mower according to Embodiment 1 of the present invention;
FIG. 4 is a partial enlarged perspective view illustrating how a connecting unit of a grass collecting unit is connected to a support frame unit of a riding-type mower according to Embodiment 1 of the present invention;
FIG. 5 is a side view illustrating how a connecting unit of a grass collecting unit is connected to a support frame unit of a riding-type mower according to Embodiment 1 of the present invention;
FIG. 6 is a schematic side view illustrating a lifting operation of a grass container unit of a riding-type mower according to Embodiment 1 of the present invention;
FIG. 7 is a schematic side view illustrating an opening and closing operation of an opening/closing lid of a grass container unit of a riding-type mower according to Embodiment 1 of the present invention;
FIG. 8 is a partial enlarged perspective view illustrating how a connecting unit of a grass collecting unit is connected to a support frame unit of a riding-type mower according to Embodiment 2 of the present invention;
FIG. 9 is a partial enlarged perspective view illustrating a procedure in which a connecting unit of a grass collecting unit is connected to a support frame unit of a riding-type mower according to Embodiment 3 of the present invention;
FIG. 10 is a schematic perspective view illustrating a locked state of a movable lever type lock link placed on a left side main support frame according to Embodiment 3 of the present invention;
FIG. 11(A) is a E-E' sectional view illustrating a cross section along E-E' in FIG. 11(B), and FIG. 11(B) is a partial enlarged perspective view illustrating how a connecting unit of a grass collecting unit is connected to a support frame unit of a riding-type mower according to Embodiment 4 of the present invention;

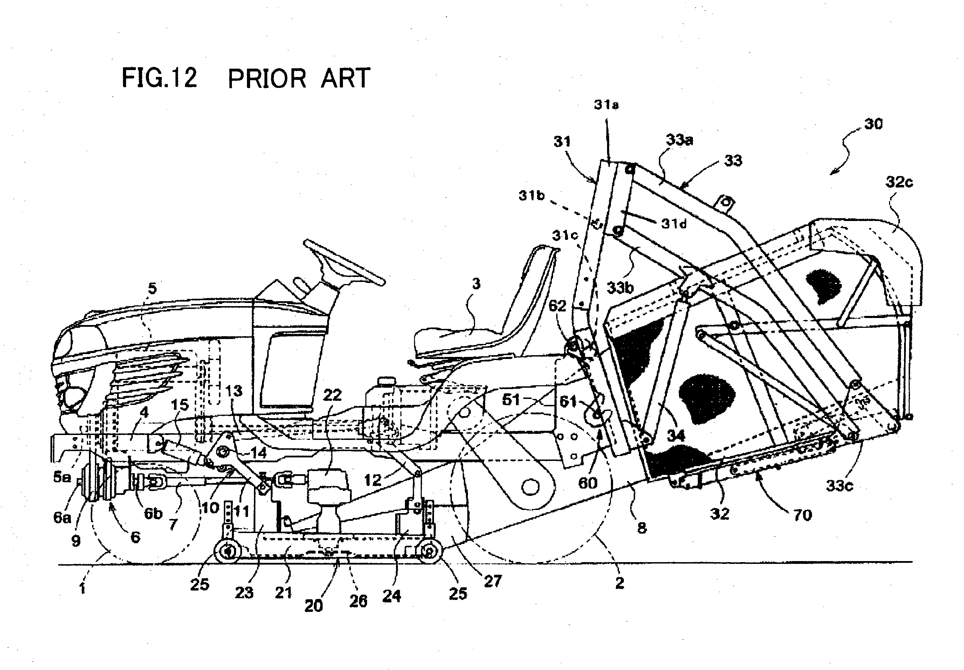

FIG. 12 is a side view illustrating a conventional riding-type mower; and
FIG. 13 is a side view illustrating how a grass collecting unit is attached to or detached from a vehicle body of a conventional riding-type mower.

### PREFERRED EMBODIMENTS OF THE INVENTION

Hereinafter, an embodiment of a riding-type mower in accordance with the present invention will be described with reference to the drawings.

### (Embodiment 1)

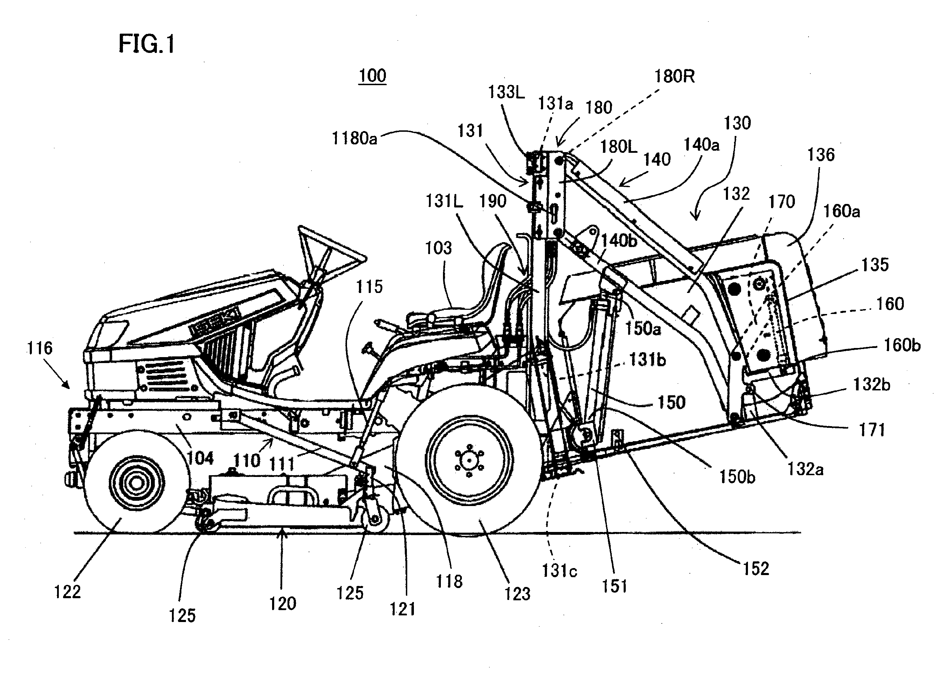

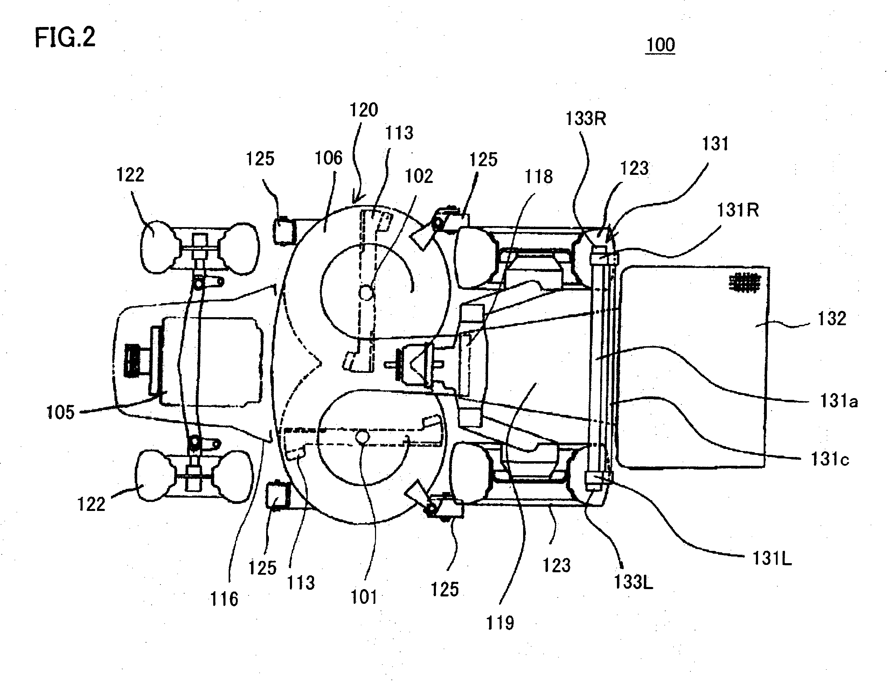

FIG. 1 is a side view illustrating a riding-type mower according to the present Embodiment 1 of the present invention, and FIG. 2 is a partial sectional schematic plan view illustrating a riding-type mower according to Embodiment 1 of the present invention.

I. The configuration of a riding-type mower 100 in accordance with the present Embodiment 1 will be described first with reference to these drawings.

As shown in FIGs. 1 and 2, the riding-type mower 100 of the present Embodiment 1 has a pair of right and left steerable front wheels 122 and 122, and a pair of right and left driven rear wheels 123 and 123, so that the riding-type mower 100 is constructed to run by itself.

The riding-type mower 100 comprises a riding-type self-propelled vehicle 116 having a driver's section with a driver's seat 103 mounted on the rear portion of the self-propelled vehicle and a grass collecting unit 130 which a grass container 132 is mounted on and is detachably connected to the support frame unit 131 fixed to the rear portion of the chassis 104 of the self-propelled vehicle 116. Further, the riding-type mower 100 has a mower unit 120 which is connected to the chassis 4 of the self-propelled vehicle between the front and rear wheels through a link mechanism 110.

Then, an example of a mower unit according to the present invention corresponds to the mower unit 120 of the present embodiment. An example of a vehicle body according to the present invention corresponds to the constitution including the chassis 104, the front wheels 122, the rear wheels 123 and so on of the present embodiment.

The support frame unit 131 is a frame unit that roughly looks like rectangle and is placed behind the driver's seat 103. The support frame unit 131 comprises a pair of right and left main support frames 131 R and 131 L which are placed in the vertical direction with respect to the self-propelled vehicle 116, a upper fixing frame 131 a which connects each of the upper ends of the main support frames 131 R and 131 L and fixes them each other, a center fixing frame 131 b which connects each of the center portions of the main support frames 131 R and 131 L and fixes them each other, and a lower fixing frame 131c which connects each of the lower ends of the main support frames 131 R and 131L and fixes them each other.

The upper portion of the support frame unit 131, that is, the upper portions of the pair of right and left main support frames 131 R and 131 L, and the upper fixing frame 131 a are placed at the position that is higher than the driver's seat 103.

Blinkers(or direction indicator lamps) 133R and 133L are placed respectively on the upper portion of the main support frames 131 R and 131 L.

Further, the other configuration and the operation of the self-propelled vehicle 116 of the riding-type mower 100 will be described hereinafter.

The self-propelled vehicle 116 that is a main body of the riding-type mower 100 further comprises an engine 105 mounted on the front portion of the chassis 104 and a power takeoff mechanism(not illustrated) arranged under the engine 105.

An output of the engine 105 took off by the power take off mechanism is transmitted to the mower unit 120 through a transmission belt(not illustrated), a rotary transmission shaft(not illustrated) and so on.

The link mechanism 110 has a pair of right and left pivotable links 111 which are supported to the chassis 104 to be vertically pivotable, and so on. The pair of right and left pivotable links 111 and 111 are connected at distal ends thereof to a rear connecting member 121 positioned at the rear portion of the mower unit 120. A lift cylinder 115 with one end thereof fixed to the lower portion of the driver's sheet 103 is connected to the neighborhood of the distal end of the pivotable link 111.

That is, the link mechanism 110 is vertically pivoted relative to the chassis 104 as the pivotable link 111 is pivoted by the lift cylinder 115. By the configuration described above, it becomes possible to perform selectively a lowered operative mode in which the ground gauge rollers 125 supporting the front portion and the rear portion of the mower unit 120 contact the ground, and a raised inoperative mode in which the ground gauge rollers 125 are raised from the ground.

When the riding-type mower 100 travels with the mower unit 120 being in the lowered operative mode, cutting blades 113 arranged transversely in the interior of the blade housing 106 are rotatably driven about a vertical axis 101 and 102. In this manner, a mowing operation is performed by action of each cutting blade 113, and the grass clippings are discharged through a grass discharge duct 118 positioned above the blade housing 106 by blown air generated by rotation of the cutting blades 113. The cutting blades 113 arranged transversely in the interior of the blade housing 106 mutually rotate in the opposite direction to perform the mowing efficiently.

The grass clippings discharged from the grass discharge duct 118 are directed to the grass container 132 by transporting action of blown air from the cutting blades 113 and guiding action of a transport duct 119 which is mounted on the self-propelled vehicle 116 and extends between the pair of right and left rear wheels 123 and 123 in a front-back direction of the self-propelled vehicle 116, and then collected and accumulated in the grass container 132.

Next, the configuration of the grass collecting unit 130 will be described mainly.

As shown in FIG. 1, the grass collecting unit 130 is provided with i)a grass container 132 which accumulates the grass clippings and is supported to be vertically movable by the outlet opening/closing links 170 through a rotary support shaft 171, ii) a grass discharge opening 135 mounted on a rear end side of the grass container 132, iii) an opening/closing lid 136 for opening and closing the grass discharge opening 135, iv) a vertical pair of lift link mechanisms 140 placed on the both side of the left and right of the grass container 132, v) lift cylinders 150 placed on the both side of the left and right of the grass container 132, vi) dump cylinders 160 placed on the rear end side of the both side of the left and right of the grass container 132 and for opening and closing the opening/closing lid 136, vii) a pair of left and right connecting unit 180(180R and 180L) for detachably connecting one end of the vertical pair of lift link mechanism 140 to the support frame unit 131, and viii) a hydraulics type piping system 190 having quick coupler to be detachable and attachable and for transmitting oil pressure to various devices hydraulics type cylinders(150, 160) from main body of the riding-type mower 100. The connecting unit 180 has a dump position fixing pin 1180a for fixing a grass discharge position of the grass container 132, which will be described blow.

Further, as shown in FIG. 1, each of the vertical pair of lift link mechanism 140 has a vertical pair of lift arms 140a and 140b on the both sides of right and left of the grass container 132 respectively, and connects front ends of the vertical pair of lift arms 140a and 140b to the connecting unit 180 movably in vertical direction.

The connecting unit 180, which connects the right vertical pair of lift arms 140a and 140b and connects the left vertical pair of lift arms 140a and 140b respectively, connects a left side connecting unit 180L to a upper end portion of a left main support frame 131 L at the position that is higher than the driver's seat 103, and connects a right side connecting member 180R to a upper end portion of a right main support frame 131 R at the position that is higher than the driver's seat 103.

In addition, each rear end of the left vertical pair of lift arms 140a and 140b is connected to the left one of a pair of right and left outlet opening/closing links 170, and each rear end of the right vertical pair of lift arms 140a and 140b is connected to the right one of a pair of right and left outlet opening/closing links 170, thereby the both right and left vertical pairs of lift arms 140a and 140b are movable in vertical direction.

In addition, each of the outlet opening/closing links 170 supports rotatably a main frame 132a through the rotary support shaft 171 placed between the positions for connecting each of the rear ends of the lift arms 140a and 140b to the outlet opening/closing links 170 respectively.

The term that comprises the outlet opening/closing link 170 and the rotary support shaft 171 is called a connecting support member in this specification.

Further, as show in FIG. 1, an end portion 160a of the cylinder body of the dump cylinder 160 is rotatably connected to the upper side of the outlet opening/closing link 170, and a tip portion 160b of the dump cylinder 160 is rotatably connected to the sub frame 132b fixed to the grass container 132.

As to the lift cylinder, as shown in FIG. 1, a piston tip portion 150a of the lift cylinder 150 is rotatably connected to a lower side of the lift arm 140b, and an end portion 150b of the lift cylinder 150 is rotatably connected to a connecting plate 151 which is detachably connected to a lower end portion of the support frame unit 131. When the grass collecting unit 130 is detached from the support frame unit 131, the connecting plate 151 can be detached from the support frame unit 131 and then can be attached to a lift cylinder hold plate 152.

II . Next, based on the above described constitution, how the grass collecting unit 130 is connected to the support frame unit 131 of a riding-type mower 100 according to the present Embodiment 1 will be described with reference to the drawings.

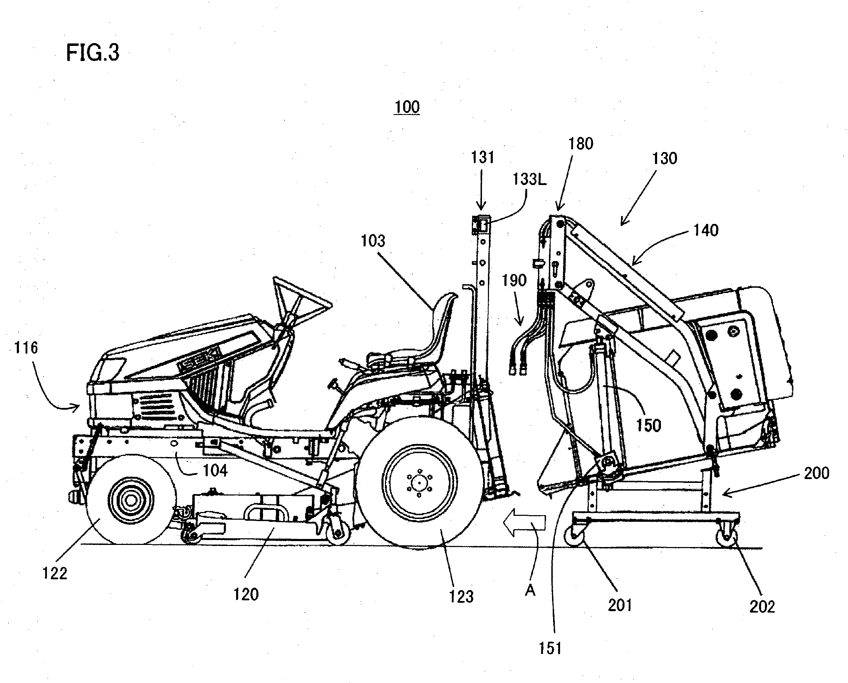

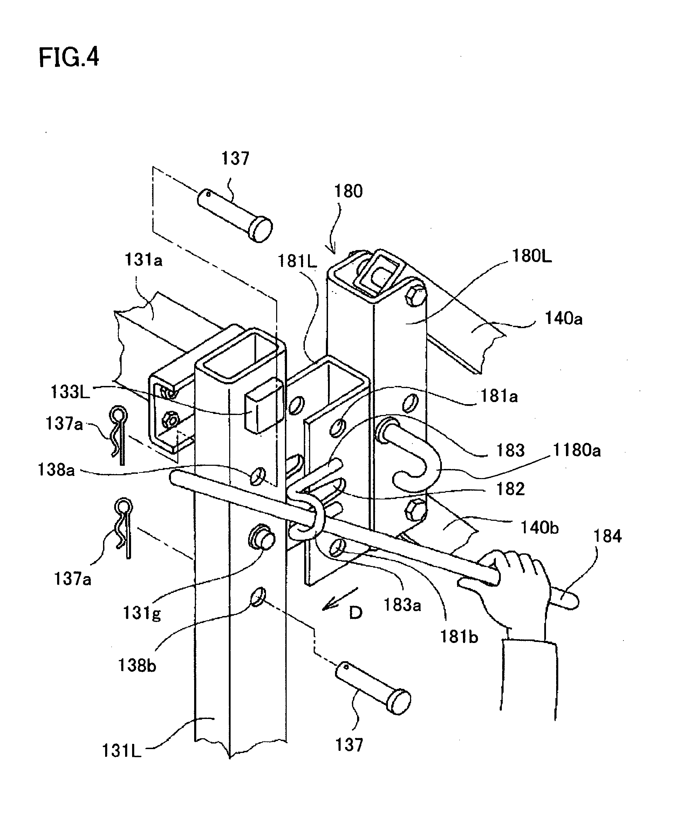

FIG. 3 is a side view illustrating a state where the grass collecting unit 130 is placed behind the support frame unit 131 of a riding-type mower 100 according to the present Embodiment 1, and FIG. 4 is a partial enlarged perspective view illustrating how the connecting unit 180 of the grass collecting unit 130 is connected to the support frame unit 131 of the riding-type mower 100 according to the Embodiment 1.

First of all, as shown in FIG. 3, the grass collecting unit 130 mounted on a carrier 200 which is movable by front caster 201 and rear caster 202 is placed behind the support frame unit 131 of the riding-type mower 100, and then is moved in the direction of arrow A.

Next, the configuration concerning connection of the support frame unit 131 and the connecting unit 180 of the riding-type mower 100 will be described with reference to FIG. 4, and then the explanation of procedure of the connection will be given.

As shown in FIG. 4, a left side connecting member 181 L with a sectional part of shape like a letter of U in alphabet, which is fitted to the main support frame 131 L with enclosing three outer sides among four sides of the left side main support frame 131 L having a quadratic prism shape in state of midair, is fixed to the left side connecting unit 180L. As to a right side connecting member(not illustrated), the explanation thereof will be omitted because the right side connecting member and the left side connecting member 181 L are symmetric structures.

In addition, the left side connecting member 181 L includes a notch part 182 formed at the center portion of the side surface thereof. The shape of the notch part 182 is formed so that the notch part 182 can fit in an outer shape of the guide pin 131g which is a columnar projection placed at the corresponding position of the left side main support frame 131 L.

An example of a protruding part for positioning according to the present invention corresponds to the guide pin 131g of the present embodiment, and an example of a hook part according to the present invention corresponds to the notch part 182 of the present embodiment.

In addition, a supporting member 183 which has a curve shaped portion 183a like the letter of U in alphabet at a center portion thereof is fixed to side surface of the left side connecting member 181 L, and both end portions of the supporting member 183 are fixed to positions of upper side and lower side of the notch part 182 respectively, with stepping over the notch part 182. Further, pin receiving openings 181 a and 181 b are formed at the upper and lower sides of the notch part 182 respectively. A set pin 137, which has a prevention member 137a that prevents the set pin from removing and maintains the connection state when the connecting member 181L is connected to the left side main support frame 131 L, can be inserted to each of the pin receiving openings 181 a and 181 b. Also, the pin receiving openings 138a and 138b are similarly formed at the correspondence positions of the upper and lower sides of the guide pin 131g of the left side main support frame 131L.

An example of a connecting pin according to the present invention corresponds to the set pin 137 of the present embodiment and an example of a pin connecting part according to the present invention corresponds to the pin receiving openings 181a and 181b of the present embodiment.

In this embodiment, based on the above described constitution, when the connecting unit 180 is connected to the supporting unit 131, a stick having a circular section or a tip portion of a driver can be used as a stick-like jig 184.

That is, when the connecting unit 180 is connected to the support frame unit 131, as shown in FIG. 4, one end portion of the stick-like jig 184 is inserted into the curve shaped portion 183a of the supporting member 183, and the one end portion of the stick-like jig 184 abuts against a side surface of the left side main support frame 131 L. With the abutting state maintained, an another end portion of the stick-like jig 184 is moved in a direction where the curve shaped portion 183a is drawn to self-propelled vehicle 116 side by using the position, as a fulcrum of the principle of leverage, where the one end of the stick-like jig 184 abuts against the side surface of the main support frame 131 L. The carrier 200 can be drawn easily and smoothly, because the casters 201 and 202 are placed under the carrier 200.

By the configuration above described, the notch part 182 can be easily moved in the direction of the guide pin 131g, and it becomes at the same time to perform the positioning work in vertical direction, so that it becomes quick to perform the connection between the connecting unit 180 and the supporting unit 131 by inserting the set pins 137 to the pin receiving openings 181a and 181b.

The height of the carrier 200 is adjusted beforehand to be able to execute the above described connection smoothly, or the height of the grass collecting unit 130 side can be adjusted lower than the height of the support frame unit 131 side. In the case that the height of the grass collecting unit 130 side has been adjusted lower than the height of the support frame unit 131 side, it becomes possible to cancel the positional gap and fit the notch part 182 to the guide pin 131g by lifting the stick-like jig 184 a little, while the supporting member 183 is drawn by moving the stick-like jig 184.

When the right side connecting unit 180R is connected to the right side main support frame 131 R, the procedure similar to the above-described can be applied.

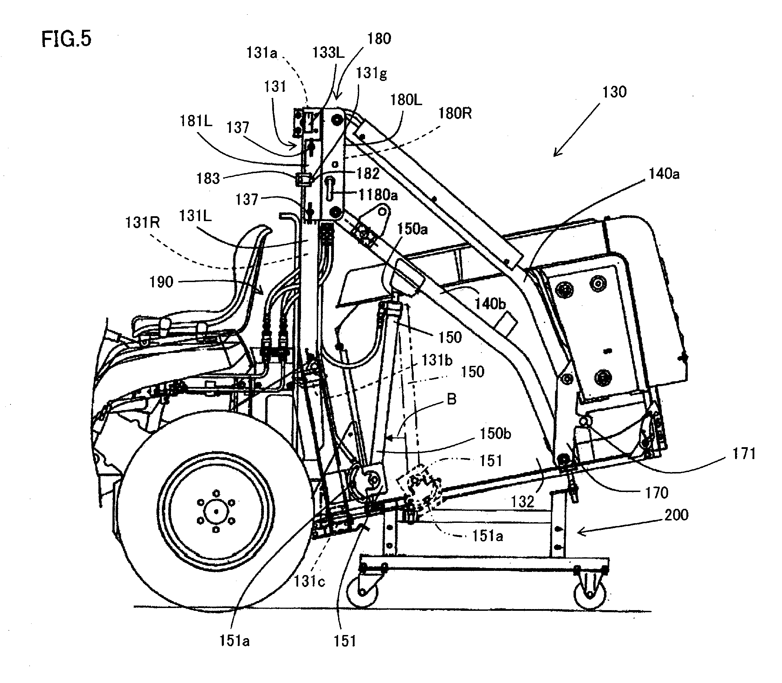

Further, as shown in FIG. 5, the lift cylinder 150 becomes rotatable state when the fixing screw 151a is removed from the connecting plate 151 which is attached to the lower side of the grass collecting unit 130. And then the lift cylinder 150 is moved in the direction of arrow B, thereafter the connecting plate 151 is fixed to the lower side portion of the support frame unit 131 with the fixing screw 151a. This work is performed equally in the left side and the right side of the grass collecting unit 130.

Next, the quick coupler of hydraulics type piping system 190 is connected to the coupler of self-propelled vehicle 116.

The grass container 132 is lifted a little to cause a space between the bottom surface of the grass container 132 and the carrier 200 by using a lifting operation lever(not illustrated) which is placed on the riding-type mower 100, thereafter the carrier 200 is moved to the rear side to be removed from the grass collecting unit 130.

By the above operation, the connecting operation of the grass container 130 is completed.

When a mowing operation ends and the grass collecting unit 130 is detached from the riding-type mower 100, the carrier 200 is placed under the grass collecting unit 130 and the operation is performed in the procedure that is reverse to the procedure described above. In the case that the detached grass collecting unit 130 which has been mounted on the carrier 200 is kept as it is, the operation for connection becomes easy at the next time.

According to the configuration of the riding-type mower 100 of the present embodiment mentioned above, since the support frame unit 131 is still placed on rear portion of the self-propelled vehicle 116 after the grass container 132 has been detached from the support frame unit 131, it becomes possible to attach the parts (for example, blinkers or direction indicator lamps) which are necessary at the time of a road run to the support frame unit 131 having a portion which extends to the position that is higher than the driver's seat 103, and it is easy to run on road.

In addition, it becomes possible to shorten the time of the attaching and detaching operation using the low-priced parts because an existing tool like the driver etc. can be used as a stick-like jig 184.

According to the configuration of the riding-type mower 100 of the embodiment mentioned above, it becomes easy to attach the grass container 132 to the support frame unit 131. And also, since each one end of the lift arms 140a and 140b is rotatably connected to the connecting unit 180 when the grass container 132 is detached from the support frame unit 131, the position of the each one end of the vertical pair of lift arms 140a and 140b mutually maintains a constant interval without disconnection.

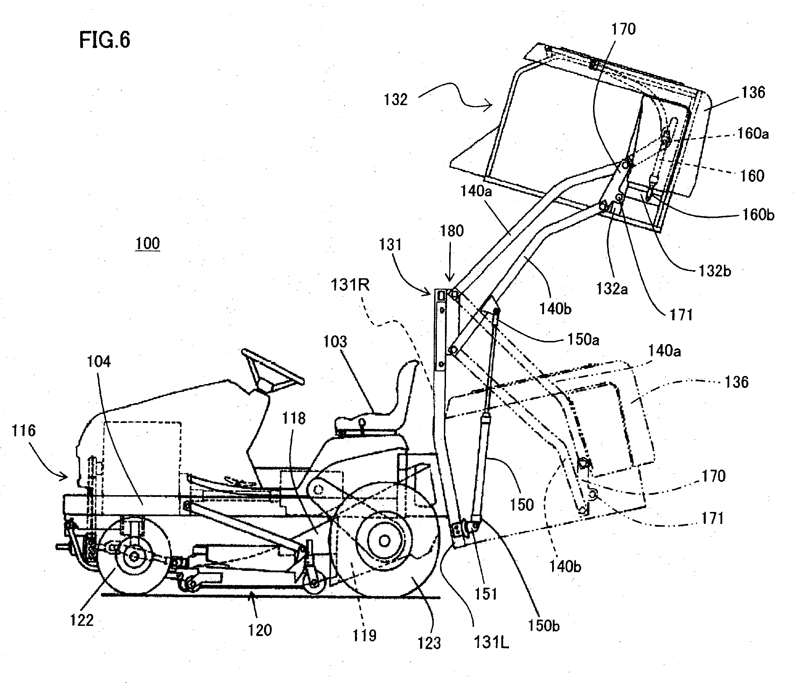

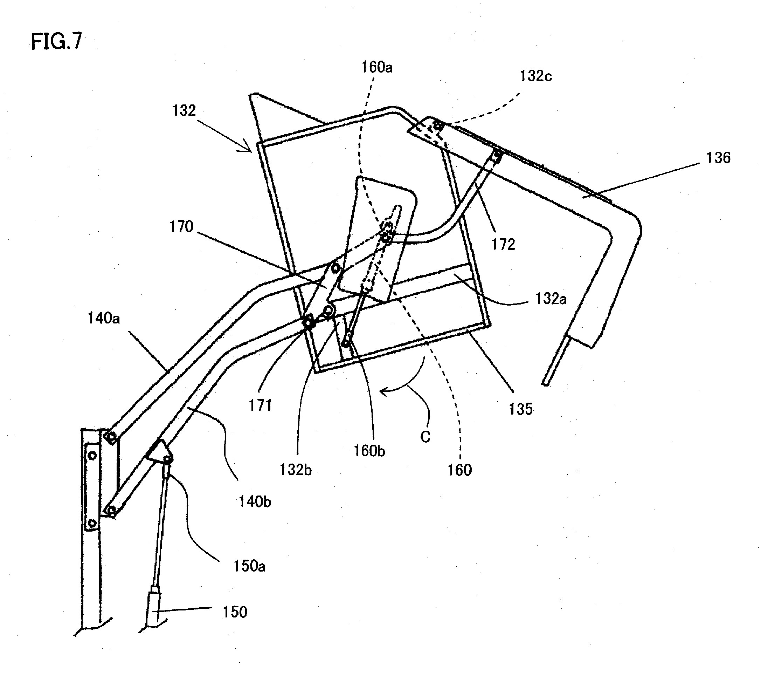

III. Next, a lifting operation for discharging the grass clippings from the grass container 132 and an opening and closing operation of the opening /closing lid 136 will be described with reference to FIGs. 6 and 7.

FIG. 6 is a schematic side view illustrating a lifting operation of a grass container unit 132 according to Embodiment 1, and FIG. 7 is a schematic side view illustrating an opening and closing operation of an opening/closing lid 136 of a grass container unit 132 according to Embodiment 1.

The lifting operation of the grass container unit 132 will be described firstly with reference to FIG. 6.

When a lifting operation lever(not illustrated) placed on the riding-type mower 100 is moved to the position of the lift operation mode, the pair of right and left lift cylinders 150 begin the operation for extending. Since each of the end portions 150b of the pair of right and left lift cylinders 150 is fixed to each of the lower end portions of the pair of right and left main support frames 131 L and 131 R through the connecting plate 151, the pair of right and left lift arms 140b which each of the piston tip portions 150a of the pair of right and left lift cylinders 150 is connected to and the pair of right and left lift arms 140a which are connected to the pair of right and left lift arms 140b through the outlet opening/closing links 170 are raised.

On the other hand, since the grass container 132 is rotatably supported by the pair of right and left outlet opening/closing links 170 through the rotary support shaft 171 and the piston tip portions 160b of the pair of right and left dump cylinders 160 attached to the pair of right and left outlet opening/closing links 170 are rotatably connected to the sub frame 132b of the grass container 132, the grass container 132 can be raised along with the rise of the lift arms 140a and 140b as shown in FIG. 6.

Next, the opening and closing operation of an opening/closing lid 136 of the grass container 132 will be described with reference to FIG. 7.

The grass container 132 begins the rise and stops rising by prescribed height as shown in FIG. 6. Afterward, an outlet opening/closing operation lever(not illustrated) placed on the riding-type mower 100 is moved to the position of the opening operation mode, so that the pair of right and left dump cylinders 160 begin the extending operation in the extension direction.

Since each of the end portions 160a of the cylinder body of the dump cylinders 160 is rotatably connected to the upper end portion of the pair of right and left outlet opening/closing links 170, the grass container 132 is rotated about the axis of the rotary support shaft 171 (which is placed in the vertical direction to plane in FIG. 7) in the direction of the arrow C according to the extending operation of the piston tip portion 160b which is rotatably connected to the sub frame 132b of the grass container 132.

On the other hand, the opening/closing lid 136 which is rotatably supported by the opening/closing support shaft 132c(see FIG. 7) on the outside wall of the grass container 132 is going to rotate in the direction of arrow C, by the weight of itself, depending on the rotation of the grass container 132, however the rotary movement of the opening/closing lid 136 is prevented by a pair of right and left opening/closing support frames 172. As a result, as shown in FIG. 7, the opening/closing lid 136 for closing the grass discharge opening 135 is allowed to be in the opened state that the opening/closing lid 136 is lifted backward, so that the grass clippings accumulated in the grass container 132 are discharged from the grass discharge opening 135 by the weight of themselves.

The each of one ends of the pair of right and left opening/closing support frames 172 is rotatably connected to each of the upper end portions of the pair of right and left outlet opening/closing links 170, and the each of another ends of the pair of right and left opening/closing support frames 172 is rotatably connected to a inner wall of the opening/closing lid 136.

### (Embodiment 2)

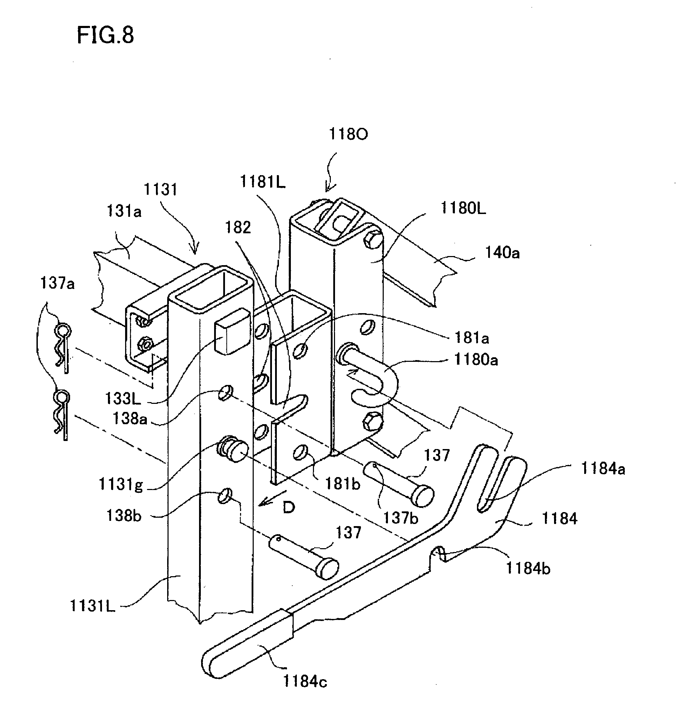

In the present Embodiment 2, modified example of the connecting mechanism which relates to the connection of the connecting unit 180 and the support frame unit 131 described above embodiment 1 will be described with reference to FIG. 8.

FIG. 8 is a partial enlarged perspective view illustrating how a connecting unit of a grass collecting unit is connected to a support frame unit of a riding-type mower 100 according to the present Embodiment 2.

The configuration of the riding-type mower 100 in the present Embodiment 2 is the same as the riding-type mower 100 in the Embodiment 1 except the connecting mechanism which relates to the connection of the connecting unit 180 and the support frame unit 131. Except the different part, reference numerals same as the Embodiment 1 are used in the present embodiment(see FIG. 8). Therefore, the different part will be mainly described below.

As shown in FIG. 8, a left side connecting member 1181 L with a section of shape like a letter of U in alphabet is fixed to the left side connecting unit 1180L of the connecting unit 1180 in the present Embodiment 2, and the dump position fixing pin 1180a having a end portion which protrudes and is curved in the shape like a letter of U in alphabet is placed on the connecting unit 1180L, like the case of FIG. 4. However, unlike the case of FIG. 4, the connecting member 1181L does not have the supporting member 183(see FIG. 4).

As to a right side connecting unit(not illustrated) contained by the connecting unit 1180, the explanation thereof will be omitted because the right side connecting unit and the left side connecting unit 1180L are symmetric structures.

In addition, like the case of FIG. 4, the pin receiving openings 138a and 138b are formed at the upper and lower sides of the guide pin 1131g which is formed to protrude from the surface of the left side main support frame 1131 L on both sides of right and left of the left side main support frame 1131 L which is included in the support frame unit 1131 of the present embodiment. However, the length of the guide pin 1131 g is longer than the guide pin 131g of FIG. 4, and the tip of the guide pin 1131g is formed in the shape of the brim to become easy to hang a board-shaped jig 1184,which will be described blow, on the guide pin 1131g.

As to a right side main support frame(not illustrated) contained by the support frame unit 1131, the explanation thereof will be omitted because the right side main support frame and the left side main support frame 1131 L are symmetric structures.

Based on the above mentioned constitution, the worker draws the grass collecting unit 130 mounted on the carrier 200 to the back of the support frame unit 1131 of the riding-type mower 1 00(see the direction of arrow A in FIG. 3). And then, the left side connecting member 1181 L and the right side connecting member(not illustrated) are moved to the connectable position in the direction of arrow D so that the pair of left and right connecting members are fitted to the left side main support frame 1131 L and the right side main support frame(not illustrated) respectively and also the guide pin 1131g is inserted to the depths of the notch part 182.

Next, the worker uses the board-shaped jig 1184 which has a curved upward tip portion having a long notch part 1184a and a thick handle part 1184c as shown in FIG. 8. More particularly, the notch part 1184a is inserted to the upper portion of the dump position fixing pin 1180a and a hemicycle notch 1184b formed on the lower side of the board-shaped jig 1184 is engaged with the guide pin 1131g. As described above, in the present embodiment, the end portion, which protrudes and is curved in the shape like a letter of U in alphabet, of the dump position fixing pin 1180a is used as a part to make board-shaped jig 1184 function effectively besides an original usage.

And then, the worker vertically pivots the handle part 1184c of the board-shaped jig 1184 a little by using the principle of leverage with a fulcrum of guide pin 1131g, while placing the tip portion of the set pins 137 to the pin receiving openings 181a and 181b respectively. As a result, when the pin receiving openings 138a and 138b on the support frame unit 1131 side are overlapped with the pin receiving openings 181a and 181b on the connecting unit 1180 side respectively, the set pins 137 are allowed to be engaged with the pin receiving openings 138a and 138b respectively. Accordingly, it becomes easy and prompt to align the pin receiving openings 138a(138b) and 181a(181b) when the set pins 137 are inserted.

After all of the set pins 137 are inserted into the pin receiving openings 138a and 138b, the prevention member 137a that prevents the set pin from removing is set to the opening 137b formed on the tip portion of the set pin 137.

As to a right side connecting operation relates to the right side connecting member(not illustrated), the explanation thereof will be omitted because the right side connecting operation is the same as the left side connecting operation described above.

According to the riding-type mower 100 of the present embodiment mentioned above, it becomes easy and prompt to align the pin receiving openings 138a(138b) and 181a(181b) which the set pins 137 are inserted.

### (Embodiment 3)

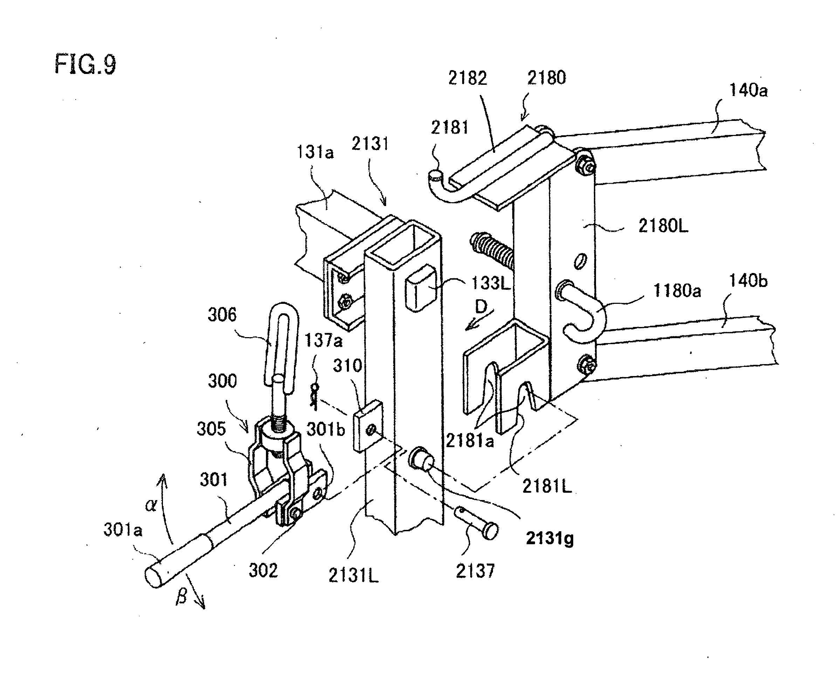

In the present Embodiment 3, modified example of the connecting mechanism which relates to the connection of the connecting unit 180 and the support frame unit 131 described above embodiment 1 will be described with reference to FIG. 9.

FIG. 9 is a partial enlarged perspective view illustrating how a connecting unit of a grass collecting unit is connected to a support frame unit of a riding-type mower 100 according to the present Embodiment 3.

The configuration of the riding-type mower 100 in the present Embodiment 3 is the same as the riding-type mower 100 in the Embodiment 1 except the connecting mechanism which relates to the connection of the connecting unit 180 and the support frame unit 131. Except the different part, reference numerals same as the Embodiment 1 are used in the present embodiment(see FIG. 9). Therefore, the different part will be mainly described below.

As shown in FIG. 9, a left side guide plate 2181 L with a section of shape like a letter of U in alphabet is fixed to the lower end side of the side surface, which is facing to the main support frame 2131 L, of the left side connecting unit 2180L of the connecting unit 2180 in the present Embodiment 3, and a hook plate 2182, which a hook bar 2181 with the tip portion curved upward is fixed to, is projected to the main support frame 2131 L side and is fixed to the upper end side of the connecting unit 2180L.

As to a right side connecting unit(not illustrated), the explanation thereof will be omitted because the right side connecting unit and the left side connecting unit 2180L are symmetric structures.

On the other hand, a guide pin 2131 is formed in a projection shape on both sides of right and left of the left side main support frame 2131L L which is included in the support frame unit 2131 of the present embodiment to be engaged with notch parts 2181a a which are formed on the guide plate 2181 L of the connecting unit 2180. In addition, a movable lever type lock link 300 is connected to a support plate 310 by the fixing pin 2137 and the prevention member 137a that prevents the set pin from removing.

As to right side main support frame(not illustrated) which is included in the support frame unit 2131, the explanation thereof will be omitted because the right side main support frame and the left side main support 2131 L are symmetric structures.

As shown in FIG. 9, a movable lever type lock link 300 has a lock link body 305, a link member 306 and a lock lever 301. The link member 306 is placed on the upper end of the lock link body 305 and is a ring-shaped part that can adjust length, and the lock lever 301 is rotatably supported by the pin 302 placed on the lower end of the lock link body 305. Since an end part 301 b that is on the opposite side of a grasp part 301 a of the lock lever 301 is connected to the support plate 310 by the fixing pin 2137 as described above, the grasp part 301 a of the lock lever 301 is turnable in the directions α and β. When the grasp part 301 a is moved in the direction α, the link member 306 is moved upward, and when the grasp part 301a is moved in the direction β, the link member 306 is moved to the lower side, so that a movable lever type lock link 300 is locked.

Based on the above mentioned constitution, the worker draws the grass collecting unit 130 mounted on the carrier 200 to the back of the support frame unit 2131 of the riding-type mower 100(see the direction of arrow A in FIG. 3). And then, the left side connecting member 2181 L and the right side connecting member(not illustrated) are moved to the connectable position in the direction of arrow D so that the pair of left and right connecting members are fitted to the left side main support frame 2131 L and the right side main support frame(not illustrated) respectively and also the guide pin 2131g is inserted to the depths of the notch part 2181a.

Next, the link member 306 is hung on the hook bar 2181 which is projected from the upper end portion of the main support frame 2131 L, and the grasp part 301 a is moved in the direction β.

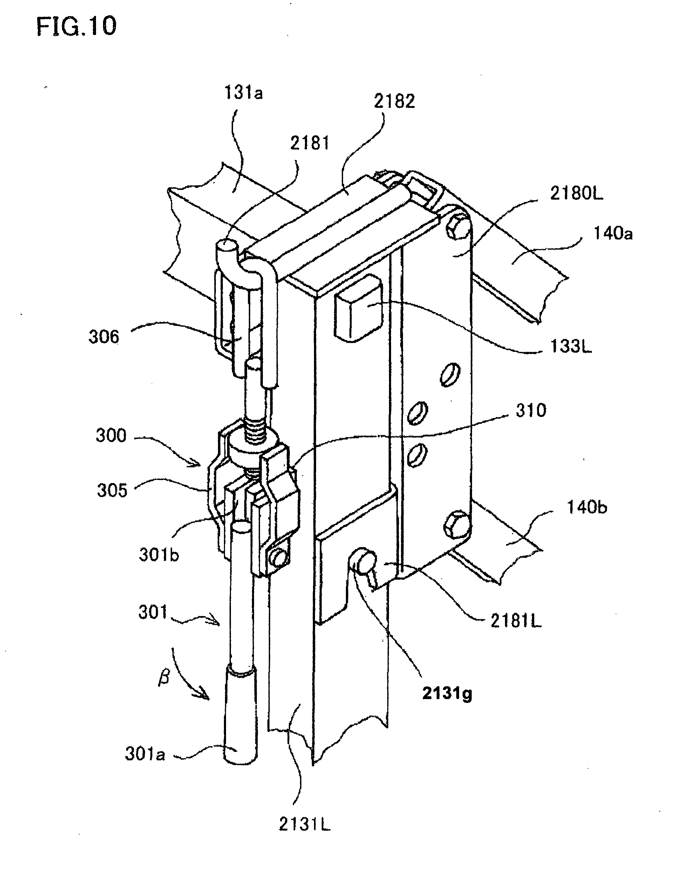

That is, as shown in FIG. 10, the link member 306 is drawn to the lower side, while the tip portion of the link member 306 is being hung on hook bar 2181 with the tip portion curved upward, so that the movable lever type lock link 300 is locked. FIG. 10 is a schematic perspective view illustrating a locked state of a movable lever type lock link 300 placed on the left side main support frame 2131 L.

As to a right side connecting operation using the movable lever type lock link(not illustrated), the explanation thereof will be omitted because the right side connecting operation is the same as the left side connecting operation described above.

According to the riding-type mower 100 of the present Embodiment 3 mentioned above, it becomes unnecessary to align the pin receiving openings 138a(138b) and 181a(181b) for inserting two set pins 137 and 137 on each of both sides of right and left connecting members(see 181 L in FIG. 4 and 1181L in FIG. 8), because the set pin 137 is not needed. Further, it is possible to lock more easily and surely by the one-touch operation with the lock lever 301.

### (Embodiment 4)

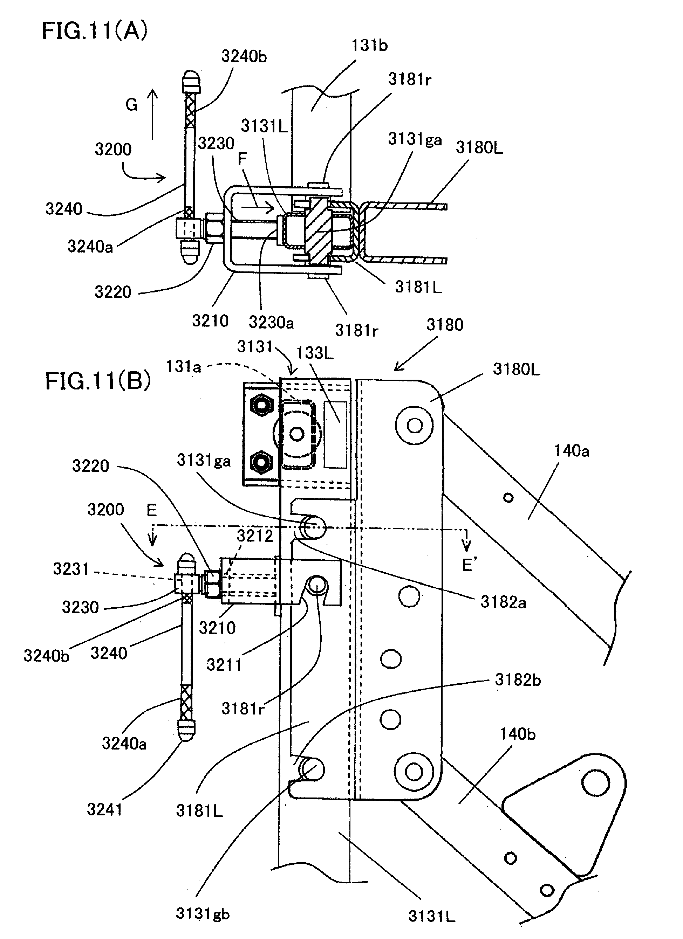

In the present Embodiment 4, modified example of the connecting mechanism which relates to the connection of the connecting unit 180 and the support frame unit 131 described above embodiment 1 will be described with reference to FIGs. 11 (A) and 11 (B).

FIG. 11(B) is a partial enlarged perspective view illustrating how a connecting unit of a grass collecting unit is connected to a support frame unit of a riding-type mower 100 according to the present Embodiment 4, and FIG. 11(A) is a E-E' sectional view illustrating a cross section along E-E' in FIG. 11(B).

The configuration of the riding-type mower 100 in the present Embodiment 4 is the same as the riding-type mower 100 in the Embodiment 1 except the connecting mechanism which relates to the connection of the connecting unit 180 and the support frame unit 131. Except the different part, reference numerals same as the Embodiment 1 are used in the present embodiment(see FIGs. 11 (A) and 11(B)). Therefore, the different part will be mainly described below.

As shown in FIGs. 11 (A) and 11 (B), a left side connecting member 3181 L with a section of shape like a letter of U in alphabet is fixed to the left side connecting unit 3180L of the connecting unit 3180 of the present embodiment, like the case of FIG. 4. However, unlike the case of FIG. 4, the connecting member 3181 L does not have the supporting member 183(see FIG. 4). In the present embodiment, the left side connecting member 3181 L has notch parts 3182a and 3182b at each position of the upper and lower portions of both sides of right and left of the connecting member 3181 L, and has a lock pin 3181 r that protrudes from the surface of the connecting member 3181 L between the notch parts 3182a and 3182b.

As to a right side connecting unit(not illustrated), the explanation thereof will be omitted because the right side connecting unit and the left side connecting unit 3180L are symmetric structures.

In addition, guide pins 3131ga and 3131gb are formed in a projection shape on both sides of right and left of the left side main support frame 3131 L which is included in the support frame unit 3131 of the present embodiment to be engaged with notch parts 3182a and 3182b which are formed on the left side connecting member 3181 L.

As to right side main support frame(not illustrated) which is included in the support frame unit 3131, the explanation thereof will be omitted because the right side main support frame and the left side main support 3131 L are symmetric structures.

Further, the riding-type mower 100 in the present embodiment has a pair of right and left connecting lock members 3200 in order to connect the connecting unit 3180 to the support frame unit 3131 and in order to fix the connecting unit 3180 to the support frame unit 3131.

As shown in FIGs. 11 (A) and 11 (B), the connecting lock member 3200 has a connecting lock body 3210, a nut part 3220 and a lock bolt 3230 which is engaged with the nut part 3220. The connecting lock body 3210 having a sectional part of shape like a letter of U in alphabet(see FIG. 11 (A)) has a pair of right and left notch parts 3211 for hanging the connecting lock member 3200 on the lock pins 3181 r that protrudes from both sides of the left side connecting member 3181 L(see FIGs. 11 (A) and 11 (B)). The nut part 3220 is fixed at the position that corresponds to a through-hole 3212 formed on the center portion of the connecting lock body 3210.

In addition, a lock handle 3240 is movably provided at a through-hole 3231 formed on one end side of the lock bolt 3230. When the lock handle 3240 is rotated clockwise by the worker, the tip part 3230a of the lock bolt 3230 moves in the direction of arrow F, and when the lock handle 3240 is rotated counterclockwise by the worker, the tip part 3230a moves in the opposite direction of arrow F.

A prevention part 3241 that prevents the lock handle 3240 from falling from through-hole 3231 is provided at the both ends of the lock handle 3240, and surface areas 3240a and 3240b which are adjacent at the prevention parts 3241 and 3241 respectively are covered with resin material in order to tighten the engagement with through-hole 3231.

Based on the above mentioned constitution, the worker draws the grass collecting unit 130 mounted on the carrier 200 to the back of the support frame unit 3 131 of the riding-type mower 100(see the direction of arrow A in FIG. 3). And then, the left side connecting member 3 181L and the right side connecting member(not illustrated) are moved to the connectable position so that the pair of left and right connecting members are fitted to respectively the left side main support frame 3131 L and the right side main support frame(not illustrated) respectively and also the guide pin s 3131ga and 3131gb are inserted to the depths of the notch parts 3182a and 3182b respectively.

Next, the worker hangs the pair of right and left notch parts 3211 and 3211, which are formed on the connecting lock body 3210, on the pair of right and left lock pins 3181 r and 3181 r of the left side connecting member 3181 L, and then rotates clockwise the lock handle 3240.

Accordingly, the tip part 3230a of the lock bolt 3230 is moved in the direction of arrow F, and tightly abuts against the side surface of the left side main support frame 3131 L, so that the connecting lock body 3210 tightly draws the left side connecting member 3181 L to the left side main support frame 3131L side through the notch part 3211 and the lock pin 3181 r. In a result, the state that the connecting unit 3180 is connected to the support frame unit 3131 is locked.

After completing the lock operation above described with reference to FIGs. 11 (A) and 11 (B), the lock handle 3240 is preferable moved in the direction of arrow G in order to allow the lock handle 3240 to be always thrust into inside of the supporting unit 3131.

As to a right side connecting operation using the connecting lock member(not illustrated), the explanation thereof will be omitted because the right side connecting operation is the same as the left side connecting operation described above.

According to the riding-type mower 100 of the present Embodiment 4 mentioned above, it becomes unnecessary to align the pin receiving openings 138a(138b) and 181a(181b) for inserting two set pins 137 and 137 on each of both sides of right and left connecting members(see 181 L in FIG. 4 and 1181 L in FIG. 8), because the set pins 137 are not needed. Further, it is possible to lock surely by only using the connecting lock member 3200.

Since both the lock lever 301 in FIG. 9 and the lock handle 3240 in FIGs. 11 (A) and 11 (B) are placed at the position near the driver's seat 103, it is easy to perform the operation when the grass collecting unit is attached to and detached from the support frame unit.

### Industrial Applicability

The riding-type mower according to the present invention provides an effect that the parts(for example, a pair of right and left blinkers, brake lamps, tail lamps, or parking lamps etc.) which are necessary at the time of a road run can be attached to a support frame unit extending to the position that is higher than the driver's seat, and are effectively applied to a riding-type mower which performs a mowing operation for cutting grass or lawn and the like.

### Reference Signs List

- 100: Riding-type mower
- 103: Driver's seat
- 104: Chassis
- 120: Mower unit
- 122: front wheel
- 123: rear wheel
- 130: Grass collecting unit
- 131: Support frame unit
- 132: Grass container
- 140: Lift link mechanism
- 180: Connecting unit

## Claims

1. A riding-type mower (100), comprising:
a vehicle body (104) having front wheels (122) and rear wheels (123);
a mower unit (120) placed below the vehicle body (104);
a grass container (132) placed behind the vehicle body (104); and
a support frame unit (131, 131L, 131R) supporting the grass container (132), which is placed on a rear portion of the vehicle body (104) and extends to a position that is higher than a driver's seat (103), wherein
the grass container (132) is detachably connected to the support frame unit (131, 131L, 131 R), and
after the grass container (132) is detached from the support frame unit (131, 131 L, 131 R), the support frame unit (131, 131 L, 131 R) is still placed on the rear portion of the vehicle body (104),
**characterized in that**
the riding-type mower (100) comprises:
a lift link mechanism (140) having a pair of lift arms (140a, 140b), which supports the grass container (132) moveably in vertical direction and is placed on a side of the grass container (132); and
a connecting unit (180) to which one end of the lift link mechanism (140) is connected, wherein the connecting unit (180) is attachable to and detachable from the support frame unit (131), and
the lift link mechanism is vertically rotatable about a fulcrum of the one end of the lift link mechanism (140).

2. The riding-type mower (100) according to claim 1,
wherein the connecting unit (180, 181L, 181R) has a hook part (182) which fits to a protruding part for positioning (131g) formed on surface of the support frame unit (131, 131 L, 131 R).

3. The riding-type mower (100) according to claim 2,
wherein the connecting unit (180, 181L, 181R) has a pin connecting part (181a, 181b) at
each position of a upper side of the hook part and a lower side of the hook part (182), and a connecting pin (137) used for connection to the support frame unit (131, 131L, 131R) is inserted into the pin connecting part (181a, 181b), and
the each connecting pin (137) penetrates to the support frame unit (131, 131 L, 131 R) through the pin connecting part (181a, 181b), so that the connecting unit (180, 181L, 181 R) is connected to the support frame unit (131, 131 L, 131 R).

4. The riding-type mower (100) according to claim 2 or 3,
wherein the connecting unit (180, 181L, 181R) has a supporting member (183) for supporting a stick-like jig (184) which is used for performing adjustment of a position when the connecting unit (180) is connected to the support frame unit (131).

5. The riding-type mower (100) according to claim 4,
wherein the support frame unit (131) has a quadratic prism-shaped support part (131L, 131R) and the protruding part for positioning (131g) is a columnar projection (131g) that protrudes from the surface of the support part (131 L, 131 R),
the connecting unit (180, 181L, 181R) has a fitting part (181L, 181R) with a section of shape like a letter of U in alphabet, the fitting part (181 L, 181 R) being fitted to the support frame unit (131 L, 131R) with enclosing three sides among four sides of the support frame unit (131L, 131R),thereby being connected to the support frame unit (131), and the hook part (182) is a notch part (182) which is formed on at least one side of mutually opposed sides of the fitting part (181 L, 181 R) with the section of shape like the letter of U in alphabet,
the supporting member (183) is a curve shaped member (183) which has a curve shaped portion (183a) like a letter of U in alphabet at a center portion thereof, and both end portions of the curve shaped member (183) are fixed to positions of upper side and lower side of the notch part (182) respectively, with stepping over the notch part (182), when the connecting unit (180, 181L, 181R) is connected to the support frame unit (131, 131L, 131R), the notch part (182) is moved to the columnar projection side and is fitted to the columnar projection(131g) in such a manner that one end of the stick-like jig (184) is inserted into the curve shaped portion (183a), the one end of the stick-like jig (184) abuts against a side surface of the support part (131L, 131R), and an another end of the stick-like jig (184) is moved by using, as a fulcrum, a position of the side surface of the support part (131 L, 131 R) against which the one end of the stick-like jig (184) abuts, in a direction where the curve shaped portion (183a) is drawn to the vehicle body (104) side, while a portion between the one end and the another end of the stick-like jig (184) is being abutted against an inner side of the curve shaped portion (183a).

## Patentansprüche

1. Ein Aufsitzmäher (100), umfassend:
eine Fahrzeugkarosserie (104), die Vorderräder (122) und Hinterräder (123) aufweist;
eine Mähereinheit (120), die unterhalb der Fahrzeugkarosserie (104) angeordnet ist;
ein Grasbehälter (132), der hinter der Fahrzeugkarosserie (104) angeordnet ist; und
eine Stützrahmeneinheit (131, 131 L, 131 R), die den Grasbehälter (132) hält, der an einem hinteren Abschnitt der Fahrzeugkarosserie (104) angeordnet ist und bis zu einer Position, die höher ist als einen Fahrersitz (103) reicht, wobei
der Grasbehälter (132) lösbar mit der Stützrahmeneinheit (131, 131L, 131R) verbunden ist, und
nachdem der Grasbehälter (132) von der Stützrahmeneinheit (131, 131 L, 131 R) gelöst ist, die Stützrahmeneinheit (131, 131L, 131R) immer noch an dem hinteren Abschnitt der Fahrzeugkarosserie (104) angeordnet ist,
**dadurch gekennzeichnet, dass** der Aufsitzmäher (100) umfasst:
ein Hebegliedeinrichtung (140), die ein Paar von Hebearmen (140a, 140b) aufweist, das den Grasbehälter (132) in vertikaler Richtung beweglich stützt und auf einer Seite des Grasbehälters (132) angeordnet ist; und
eine Verbindungseinheit (180) mit der ein Ende der Hebegliedeinrichtung (140) verbunden ist,
wobei die Verbindungseinheit (180) an der Stützrahmeneinheit (131) anbringbar und von dieser lösbar ist, und
die Hebegliedeinrichtung vertikal um einen Drehpunkt dieses Endes der Hebegliedeinrichtung (140) drehbar ist.

2. Aufsitzmäher (100) nach Anspruch 1,
wobei die Verbindungseinheit (180, 181L, 181 R) ein Hakenteil (182) aufweist, das mit einem vorstehenden Teil zum Positionieren (131g) zusammenpasst, das auf der Oberfläche der Stützrahmeneinheit (131, 131 L, 131 R) ausgebildet ist.

3. Aufsitzmäher (100) nach Anspruch 2,
wobei die Verbindungseinheit (180, 181 L, 181 R) jeweils ein Zapfenverbindungsteil (181 a, 181b) an Positionen auf einer oberen und einer unteren Seite des Hakenteils (182) aufweist, und
ein Verbindungsstift (137), der zur Verbindung mit der Stützrahmeneinheit (131, 131 L, 131 R) verwendet wird, in das Zapfenverbindungsteil (181 a, 181 b) eingesetzt ist, und jeder der Verbindungsstifte (137) die Stützrahmeneinheit (131, 131L, 131 R) durch das Zapfenverbindungsteil (181a, 181b) hindurch durchdringt, so dass die Verbindungseinheit (180, 181L, 181 R) mit der Stützrahmeneinheit (131, 131 L, 131 R) verbunden ist.

4. Aufsitzmäher (100) nach Anspruch 2 oder 3,
wobei die Verbindungseinheit (180, 181 L, 181 R) ein Stützelement (183) zum Halten einer stabförmigen Vorrichtung (184) aufweist, die zum Durchführen der Einstellung einer Position verwendet wird, wenn die Verbindungseinheit (180) mit der Stützrahmeneinheit (131) verbunden ist.

5. Aufsitzmäher (100) nach Anspruch 4,
wobei die Stützrahmeneinheit (131) ein quadratisches, prismenförmiges Halteteil (131L, 131R) aufweist, und das vorstehende Teil zum Positionieren (131g) ein säulenförmiger Vorsprung (131 g) ist, der von der Oberfläche des Halteteils (131 L, 131 R) vorsteht, die Verbindungseinheit (180, 181 L, 181R) ein Anschlussteil (181L, 181R) mit einem Bereich in der Form des Buchstabens U des Alphabets aufweist,
wobei das Anschlussteil (181 L, 181 R) an der Stützrahmeneinheit (131 L, 131 R) anliegt und drei von vier Seiten der Stützrahmeneinheit (131 L, 131 R) umschließt,
wodurch es mit der Stützrahmeneinheit (131) verbunden ist,
und das Hakenteil (182) ein Aussparungsteil (182) ist, das auf wenigstens einer Seite der einander gegenüberliegenden Seiten des Anschlussteils (181 L, 181 R) mit dem Bereich in der Form des Buchstabens U des Alphabets ausgebildet ist,
das Stützelement (183) ein bogenförmiges Element (183) ist, das einen bogenförmigen Abschnitt (183a) wie ein Buchstabe U des Alphabets in einem mittleren Abschnitt davon aufweist,
und beide Endabschnitte des bogenförmigen Elements (183) jeweils an Positionen auf einer oberen und einer unteren Seite des Aussparungsteils (182) befestigt sind, und das Aussparungsteil (182) übergreifen,
wobei, wenn die Verbindungseinheit (180, 181L, 181R) mit der Stützrahmeneinheit (131, 131 L, 131 R) verbunden ist, das Aussparungsteil (182) zu dem säulenförmigen Vorsprung hin bewegt wird und an dem säulenförmigen Vorsprung (131g) in der Weise anliegt, dass ein Ende der stabförmigen Vorrichtung (184) in den bogenförmigen Abschnitt (183a) eingesetzt ist, wobei dieses Ende der stabförmigen Vorrichtung (184) an einer Seitenfläche des Halteteils (131 L, 131 R) anliegt,
und ein anderes Ende der stabförmigen Vorrichtung (184) in eine Richtung bewegt wird, wobei eine Position der Seitenfläche des Halteteils (131 L, 131 R), an der das eine Ende der stabförmigen Vorrichtung (184) anliegt, als ein Drehpunkt verwendet wird,
in die der bogenförmige Abschnitt (183a) auf die Seite der Fahrzeugkarosserie (104) gezogen wird, während ein Abschnitt zwischen dem einen und dem anderen Ende der stabförmigen Vorrichtung (184) an einer Innenseite des bogenförmigen Abschnitts (183a) anliegt.

## Revendications

1. Tondeuse à gazon à conducteur porté (100) comprenant :
une carrosserie de véhicule (104) ayant des roues avant (122) et des roues arrière (123) ;
une unité de tonte (120) disposée en dessous de la carrosserie de véhicule (104) ;
un récipient à herbe (132) disposé derrière la carrosserie de véhicule (104) ; et
une unité de châssis support (131, 131L, 131R) supportant le récipient à herbe (132), qui est disposée sur la partie arrière de la carrosserie de véhicule (104) et s'étend jusqu'à une position qui est plus haute que le siège du conducteur (103), dans laquelle
le récipient à herbe (132) est raccordé de manière amovible à l'unité de châssis support (131, 131L, 131R), et
après avoir séparé le récipient à herbe (132) de l'unité de châssis support (131, 131L, 131R), l'unité de châssis support (131, 131L, 131R) est toujours disposée sur la partie arrière de la carrosserie de véhicule (104),
**caractérisée en ce que**
la tondeuse à gazon à conducteur porté (100) comprend :
un mécanisme de liaison de levage (140) comportant une paire de bras de levage (140a, 140b) qui supportent le récipient à herbe (132) de façon mobile dans le sens vertical et qui est disposée sur un côté du récipient à herbe (132) ; et
une unité de raccordement (180) à une extrémité de laquelle est raccordé le mécanisme de liaison de levage (140),
dans laquelle l'unité de raccordement (180) peut être fixée à l'unité de châssis support (131) et détachée de celle-ci, et
le mécanisme de liaison de levage peut tourner verticalement autour d'un pivot de l'extrémité du mécanisme de liaison de levage (140).

2. Tondeuse à gazon à conducteur porté (100) selon la revendication 1,
dans laquelle l'unité de raccordement (180, 181L, 181R) comporte une partie d'accrochage (182) qui s'ajuste avec une partie en saillie pour positionnement (131g) formée sur la surface de l'unité de châssis support (131, 131L, 131R).

3. Tondeuse à gazon à conducteur porté (100) selon la revendication 2,
dans laquelle l'unité de raccordement (180, 181L, 181R) comporte une partie de raccordement d'axe (181a, 181b) dans chaque position du côté supérieur de la partie d'accrochage et du côté inférieur de la partie d'accrochage (182), et
un axe de raccordement (137) utilisé pour le raccordement à l'unité de châssis support (131, 131L, 131R) est inséré dans la partie de raccordement d'axe (181a, 181b), et
chaque axe de raccordement (137) pénètre dans l'unité de châssis support (131, 131L, 131R) par l'intermédiaire de la partie de raccordement d'axe (181a, 181b) de sorte que l'unité de raccordement (180, 181L, 181R) est raccordée à l'unité de châssis support (131, 131L, 131R).

4. Tondeuse à gazon à conducteur porté (100) selon la revendication 2 ou 3,
dans laquelle l'unité de raccordement (180, 181L, 181R) comporte un élément support (183) pour supporter un accessoire en forme de tige (184) qui est utilisé pour effectuer le réglage d'une position lorsque l'unité de raccordement (180) est raccordée à l'unité de châssis support (131).

5. Tondeuse à gazon à conducteur porté (100) selon la revendication 4,
dans laquelle l'unité de châssis support (131) comporte une partie support en forme de prisme quadratique (131L, 131R) et la partie en saillie pour positionnement (131g) est une partie saillante de colonne (131g) qui dépasse de la surface de la partie support (131L, 131R),
l'unité de raccordement (180, 181L, 181R) comporte une partie d'ajustement (181L, 181R) dont la section a la forme de la lettre U de l'alphabet, la partie d'ajustement (181L, 181R) étant ajustée sur l'unité de châssis support (131L, 131R) en entourant trois côtés parmi quatre côtés de l'unité de châssis support (131L, 131R), de façon à être raccordée à l'unité de châssis support (131), et la partie d'accrochage (182) est une partie entaillée (182) qui est formée au moins sur un côté des côtés mutuellement opposés de la partie d'ajustement (181L, 181R) dont la section a la forme de la lettre U de l'alphabet,
l'élément support (183) est un élément en forme de courbe (183) comportant une partie en forme de courbe (183a) ayant la forme de la lettre U de l'alphabet dans sa partie centrale, et les deux parties d'extrémité de l'élément en forme de courbe (183) sont respectivement fixées dans des positions de la face supérieure et de la face inférieure de la partie entaillée (182), avec enjambement de la partie entaillée (182),
lorsque l'unité de raccordement (180, 181L, 181R) est raccordée à l'unité de châssis support (131, 131L, 131R), la partie entaillée (182) est déplacée vers le côté de la partie saillante de colonne et est ajustée sur la partie saillante de colonne (131g) de telle manière qu'une extrémité de l'accessoire en forme de tige (184) est insérée dans la partie en forme de courbe (183a), ladite extrémité de l'accessoire en forme de tige (184) vient en butée contre une surface latérale de la partie support (131L, 131R), et une autre extrémité de l'accessoire en forme de tige (184) est déplacée en utilisant comme pivot la position de la surface latérale de la partie support (131L, 131R) contre laquelle ladite extrémité de l'accessoire en forme de tige (184) vient en butée, dans une direction où la partie en forme de courbe (183a) est extraite du côté de la carrosserie de véhicule (104), tandis qu'une partie située entre ladite extrémité et l'autre extrémité de l'accessoire en forme de tige (184) vient en butée contre la face interne de la partie en forme de courbe (183a).
